# EUROPEAN PATENT APPLICATION

(11) **EP 3 467 932 A1**
(43) Date of publication of application: **10.04.2019**
(21) Application number: 17806654.4
(22) Date of filing: 30.05.2017
(51) Int. Cl.: H01M 10/26, H01M 2/38, H01M 2/40, H01M 4/24, H01M 8/18, H01M 10/615, H01M 10/6571

(54) **ZINC CELL AND ZINC FLOW CELL**

(30) Priority: 31.05.2016 JP 2016109567
(71) Applicant: KYOCERA Corporation, Kyoto 612-8501 (JP)
(72) Inventor: UMESATO, Kazumasa, Kyoto-shi Kyoto 612-8501 (JP)
(74) Representative: Viering, Jentschura & Partner mbB Patent- und Rechtsanwälte
(86) International application number: PCT/JP2017/020016
(87) International publication number: WO 2017/209100

(57) **Abstract**

A zinc battery according to an embodiment includes a negative electrode and a positive electrode, an electrolytic solution, and a powder. The electrolytic solution is in contact with the negative electrode and the positive electrode. The powder includes zinc and is mixed in the electrolytic solution. A zinc flow battery according to an embodiment includes a reaction chamber and a stirrer. The reaction chamber includes the zinc battery. The stirrer stirs the electrolytic solution.

## Description

### Field

Embodiments disclosed herein relate to a zinc battery and a zinc flow battery.

### Background

A flow battery having an electrolytic solution, which contains tetrahydroxy zincate ions ([Zn(OH)₄]²⁻) and is circulated between a positive electrode and a negative electrode, has been known conventionally (as seen in, for example, Non-Patent Literature 1).

Further, a technique for reducing growth of dendrite by covering a negative electrode including an active material, such as a zinc species, with an ion conductive layer having selective ion conductivity has been proposed (as seen in, for example, Patent Literature 1).

### Citation List

### Patent Literature

Patent Literature 1: Japanese Patent Application Laid-open No. 2015-185259

### Non-Patent Literature

Non-Patent Literature 1: Y. Ito., et al.: Zinc Morphology in Zinc-Nickel Flow Assisted Batteries and Impact on Performance, Journal of Power Sources, Vol. 196, pp. 2340-2345, 2011

### Summary

A zinc battery according to an aspect of embodiments includes a negative electrode and a positive electrode, an electrolytic solution, and a powder. The electrolytic solution contacts with the negative electrode and the positive electrode. The powder includes zinc and mixed in the electrolytic solution.

### Brief Description of Drawings

FIG. 1 is a diagram illustrating an outline of a zinc battery according to a first embodiment.
FIG. 2 is a diagram illustrating an outline of a zinc battery according to a modified example of the first embodiment.
FIG. 3 is a diagram illustrating an outline of a zinc battery according to a second embodiment.
FIG. 4A is a diagram illustrating an outline of a zinc flow battery according to the first embodiment.
FIG. 4B is a diagram illustrating an outline of the zinc flow battery according to the first embodiment.
FIG. 4C is a diagram for explanation of an example of connection between electrodes of the zinc flow battery according to the first embodiment.
FIG. 5A is a diagram illustrating an outline of a zinc flow battery according to the second embodiment.
FIG. 5B is a diagram illustrating an outline of the zinc flow battery according to the second embodiment.
FIG. 6 is a diagram illustrating an outline of a zinc flow battery according to a third embodiment.

### Description of Embodiments

Hereinafter, by reference to the appended drawings, embodiments of a zinc battery and a zinc flow battery disclosed by this application will be described in detail. The invention is not limited by the embodiments described below.

### Zinc Battery According to First Embodiment

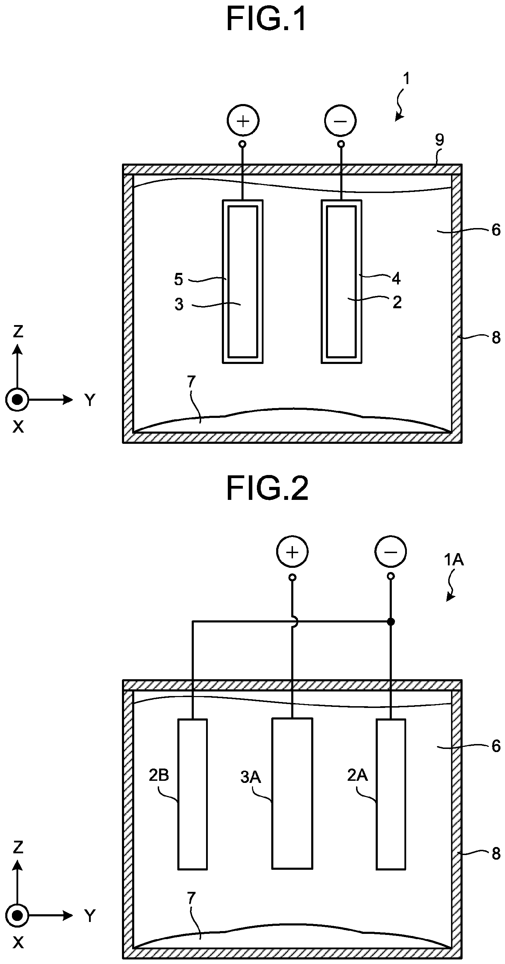

FIG. 1 is a diagram illustrating an outline of a zinc battery according to a first embodiment. A zinc battery 1 illustrated in FIG. 1 includes a negative electrode 2, a positive electrode 3, a porous body 4, a coating 5, an electrolytic solution 6, a powder 7, a case 8, and an upper plate 9.

For ease of understanding of the description, FIG. 1 illustrates a three-dimensional rectangular coordinate system including a Z-axis having a positive direction vertically upward and a negative direction vertically downward. This rectangular coordinate system may be illustrated in any other drawing used in the description later.

The negative electrode 2 includes a negative electrode active material as metal. For example, a metal plate made of stainless steel, copper, or the like, or a stainless steel or copper plate having a surface that has been plated with nickel, tin, or zinc, may be used as the negative electrode 2. Further, a metal plate having a plated surface that has been partially oxidized may be used as the negative electrode 2.

The positive electrode 3 is an electrically conductive member containing, for example, a nickel compound, a manganese compound, or a cobalt compound, which serves as a positive electrode active material. The nickel compound is preferably, for example, nickel oxyhydroxide, nickel hydroxide, or cobalt-containing nickel hydroxide. The manganese compound is preferably, for example, manganese dioxide. The cobalt compound is preferably, for example, cobalt hydroxide or cobalt oxyhydroxide. Further, the positive electrode 3 may include graphite, carbon black, an electrically conductive resin, or the like. In terms of oxidation-reduction potential for decomposition of the electrolytic solution 6, the positive electrode 3 preferably contains the nickel compound.

The electrolytic solution 6 is an alkali aqueous solution containing a zinc species. The zinc species in the electrolytic solution 6 is dissolved in the electrolytic solution as [Zn(OH)₄]²⁻. For example, an alkali aqueous solution containing K⁺ and OH⁻ and saturated with the zinc species may be used as the electrolytic solution 6. The electrolytic solution 6 is preferably prepared, together with the powder 7, which will be described later. For example, a 6.7 moldm⁻³ aqueous potassium hydroxide solution may be used as the alkali aqueous solution. Further, the electrolytic solution 6 may be prepared by addition of ZnO into the aqueous potassium hydroxide solution at a ratio of 0.5 mol to 1 dm⁻³, and as necessary, addition of the powder 7 described later.

The powder 7 includes zinc. Specifically, the powder 7 is, for example, zinc oxide or zinc hydroxide, which has been processed into or formed as powder. The powder 7 easily dissolves in an alkali aqueous solution, but settles out without dissolving in the electrolytic solution 6 saturated with the zinc species, and some of the powder 7 is also mixed in the electrolytic solution 6 in a dispersed or floating state. If the electrolytic solution 6 has been left to stand for a long period of time, most of the powder 7 may have settled out, but if convection or the like is caused in the electrolytic solution 6, some of the powder 7 that has settled out will be in a state dispersed or floating in the electrolytic solution 6. In other words, the powder 7 exists movably in the electrolytic solution 6. Being movable herein does not mean that a part of the powder 7 is able to move only in a local space formed in another part of the powder 7 surrounding that part of the powder 7, but means that by moving in the electrolytic solution 6 from an initial position to a different position, the powder 7 is exposed to the electrolytic solution 6 that is not at the initial position. Further, the meaning of being movable includes that the powder 7 is able to move to the vicinity of both the negative electrode 2 and positive electrode 3, and that the powder 7 is able to move to almost anywhere in the electrolytic solution 6 that is in the case 8. When [Zn(OH)₄]²⁻, which is the zinc species dissolved in the electrolytic solution 6, is consumed, the powder 7 that is also mixed in the electrolytic solution 6 is dissolved until the zinc species dissolved in the electrolytic solution 6 is saturated, such that the powder 7 and the electrolytic solution 6 maintain their equilibrium state.

Electrode reactions in a nickel-zinc battery, which is an example of the zinc battery 1, will be described, the nickel-zinc battery having nickel hydroxide used therein as a positive electrode active material. Reaction formulae for the positive electrode 3 and the negative electrode 2 upon battery charging are respectively as follows.

Positive electrode: Ni(OH)₂ + OH⁻ → NiOOH + H₂O + e⁻
Negative electrode: [Zn(OH)₄]²⁻ + 2e⁻ → Zn + 4OH⁻

There is generally concern that dendrite that has been generated at the negative electrode 2 in association with these reactions will grow toward the positive electrode 3, and the negative electrode 2 and the positive electrode 3 will become electrically conductive to each other. As evident from the reaction formulae, at the negative electrode 2, in association with deposition of zinc by the battery charging, concentration of [Zn(OH)₄]²⁻ in the vicinity of the negative electrode 2 is decreased. It has been found that this phenomenon of the concentration of [Zn(OH)₄]²⁻ being decreased in the vicinity of the deposited zinc is one cause of the growth of dendrite. In other words, by resupply of [Zn(OH)₄]²⁻ in the electrolytic solution 6 consumed upon the battery charging, concentration of [Zn(OH)₄]²⁻ that is the zinc species in the electrolytic solution 6 is maintained in the saturated state. Thereby, the growth of dendrite is reduced, and the electric conduction between the negative electrode 2 and the positive electrode 3 is thus reduced.

Accordingly, the zinc battery 1 according to the first embodiment has the powder 7 including zinc, mixed also in the electrolytic solution 6. Thereby, when [Zn(OH)₄]²⁻ in the electrolytic solution 6 is consumed by battery charging, [Zn(OH)₄]²⁻ is resupplied in the electrolytic solution 6 by dissolution of zinc in the powder 7 in accordance with the consumption. Therefore, the concentration of [Zn(OH)₄]²⁻ in the electrolytic solution 6 is able to be maintained in the saturated state, and electric conduction between the negative electrode 2 and the positive electrode 3 associated with the growth of dendrite is thus able to be reduced.

Examples of the powder 7 include, in addition to zinc oxide and zinc hydroxide: metallic zinc; calcium zincate; zinc carbonate; zinc sulfate; and zinc chloride, where zinc oxide and zinc hydroxide are preferable.

Further, Zn is consumed and [Zn(OH)₄]²⁻ is generated by electric discharge at the negative electrode 2, but since the electrolytic solution 6 is already in the saturated state, ZnO is deposited in the electrolytic solution 6 from [Zn(OH)₄]²⁻ that has become excessive. Zinc consumed at the negative electrode 2 upon the electric discharge is zinc that has been deposited on the surface of the negative electrode 2 upon battery charging. Therefore, differently from a case where charging and discharging are basically repeated by use of a negative electrode containing a zinc species, so-called shape change where the surface shape of the negative electrode 2 changes is not caused. Thereby, the zinc battery 1 according to the first embodiment enables reduction of time degradation of the negative electrode 2. Depending on the state of the electrolytic solution 6; Zn(OH)₂, or a mixture of ZnO and Zn(OH)₂ may be deposited from [Zn(OH)₄]²⁻ that has become excessive.

By reference back to FIG. 1, the zinc battery 1 according to the first embodiment will be described further. The porous body 4 covers the negative electrode 2. The porous body 4 is formed of a material having electric conductivity, for example, carbon felt. When the porous body 4 is used, the reaction field between the electrolytic solution 6 and the negative electrode 2 is enlarged, the reaction rate upon charging and discharging is improved, and the generation of dendrite associated with centralization of the reaction field is reduced. Further, the electrolytic solution 6 is diffused over the whole surface of the negative electrode 2 via voids in the porous body 4, and use efficiency of the negative electrode 2 is thus improved. Furthermore, when the porous body 4 and the negative electrode 2 are in contact with each other, for example, electric resistance at the negative electrode 2 is decreased by increase in substantial specific surface area of the negative electrode 2, and the power collection performance is thus improved. Accordingly, by the negative electrode 2 being covered with the porous body 4 having electric conductivity, the battery performance is improved.

The coating 5 covers the positive electrode 3. The coating 5 has hydroxide ion conductivity, and conducts hydroxide ions related to the electrode reactions. Further, the coating 5 is preferably formed densely such that the zinc metal and the powder 7 do not pass through the coating 5. Thereby, failure where the negative electrode 2 and the positive electrode 3 become electrically conductive to each other is able to be reduced further, the failure being caused by penetration of the grown dendrite through the coating 5 or passage of the powder 7 through the coating 5. Being dense herein means having a relative density of 90% or more, preferably 92% or more, and more preferably 95% or more, as calculated by the Archimedes method. Thickness of the coating 5 is preferably 10 µm to 1000 µm, and more preferably 100 µm to 500 µm. However, the relative density and thickness of the coating 5 are not limited to those mentioned above, as long as the penetration of dendrite and the passage of the powder 7 through the coating 5 are able to be reduced.

Preferably, the coating 5 selectively allows hydroxide ions to permeate therethrough, but reduces permeation of metal ions, such as [Zn(OH)₄]²⁻, having an ionic radius larger than that of hydroxide ions. By this reduction of permeation of metal ions, such as [Zn(OH)₄]²⁻, by the coating 5; generation of dendrite inside the coating 5 and in the vicinity of the positive electrode 3 is reduced, and thus electric conduction between the negative electrode 2 and the positive electrode 3 is able to be reduced further.

The coating 5 is preferably formed by use of, for example, a gelatinous anion conductive material having a three-dimensional structure like organic hydrogel, or a solid polymer type anion conductive material. The solid polymer type anion conductive material includes, for example, a polymer, and one or more compounds selected from the group consisting of: an oxide, a hydroxide, a layered double hydroxide, a sulfate compound, and a phosphate compound, each of which contains one or more elements selected from the 1st group to the 17th group of the periodic table.

The case 8 and the upper plate 9 are formed of, for example, a resin material having alkali resistance and insulation properties, such as polystyrene, polypropylene, polyethylene terephthalate, or polytetrafluoroethylene.
The case 8 and the upper plate 9 are preferably formed of the same material, but may be formed of materials different from each other.

Further, the zinc battery 1 having the single negative electrode 2 correspondingly to the single positive electrode 3 has been described above with respect to the embodiment, but the embodiment is not limited to this zinc battery 1. This point will be described by use of FIG. 2.

### Modified Example

FIG. 2 is a diagram illustrating an outline of a zinc battery according to a modified example of the first embodiment. A zinc battery 1A illustrated in FIG. 2 has the same configuration as that of the zinc battery 1 illustrated in FIG. 1, except that the zinc battery 1A includes, instead of the positive electrode 3 and the negative electrode 2: negative electrodes 2A and 2B; and a positive electrode 3A. In FIG. 2, illustration of parts corresponding to the porous body 4 and coating 5 illustrated in FIG. 1 has been omitted. Hereinafter, unless otherwise noted, illustration and description of the porous body 4 and coating 5 will be omitted.

The negative electrodes 2A and 2B are arranged to face each other, with the positive electrode 3A interposed between the negative electrodes 2A and 2B. The negative electrode 2A and the negative electrode 2B are connected in parallel, and the current density per negative electrode is lower than that in the zinc battery 1 illustrated in FIG. 1. Therefore, the zinc battery 1A according to the modified example of the first embodiment enables further reduction of generation of dendrite at the negative electrodes 2A and 2B, and electric conduction between the negative electrodes 2A and 2B and the positive electrode 3A is thus able to be reduced further.

### Zinc Battery According to Second Embodiment

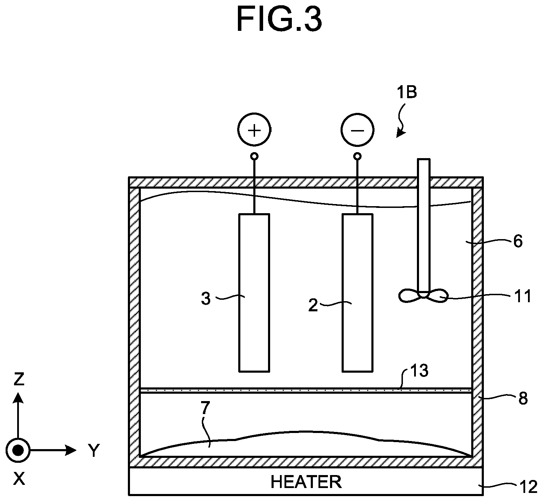

FIG. 3 is a diagram illustrating an outline of a zinc battery according to a second embodiment. A zinc battery 1B illustrated in FIG. 3 has the same configuration as that of the zinc battery 1 illustrated in FIG. 1, except that the zinc battery 1B further includes a stirrer 11, a heater 12, and a filter member 13.

The stirrer 11 is a device for forcibly making the electrolytic solution 6 flow. By the electrolytic solution 6 being made to flow, concentration distribution of [Zn(OH)₄]²⁻ in the electrolytic solution 6 is made uniform quickly. Further, when the concentration of [Zn(OH)₄]²⁻ in the electrolytic solution 6 is not saturated, dissolution of the powder 7 in the electrolytic solution 6 is promoted. By the stirrer 11 being operated, the concentration of [Zn(OH)₄]²⁻ in the electrolytic solution 6 is increased quickly, the concentration having been decreased in the vicinity of the negative electrode 2 in association with battery charging; and the growth of dendrite is thus reduced further. The stirrer 11 is particularly useful, for example, when the shape of the case 8 is complicated, or upon battery charging in a low temperature region where natural convection of the electrolytic solution 6 or dissolution of the powder 7 in the electrolytic solution 6 is slow.

The stirrer 11 may be operated at all times, but in terms of reduction in power consumption, the stirrer 11 is preferably operated only at the time of battery charging. Further, rotational speed of the stirrer 11 may be changed according to the consumption rate of [Zn(OH)₄]²⁻ in the electrolytic solution 6.

The heater 12 is a device for heating the electrolytic solution 6. By heating of the electrolytic solution 6, the concentration of [Zn(OH)₄]²⁻ that is able to be dissolved in the electrolytic solution 6, that is, the saturation concentration, is increased. Thereby, the concentration of [Zn(OH)₄]²⁻ dissolved in the electrolytic solution 6 is increased, and the growth of dendrite is reduced further.

The filter member 13 is a member for filtering the powder 7 that is mixed in the electrolytic solution 6. The filter member 13 is arranged between: the powder 7 in the electrolytic solution 6; and the negative electrode 2 and positive electrode 3. The filter member 13 is formed so as to pass [Zn(OH)₄]²⁻ dissolved in the electrolytic solution 6 therethrough and to not pass the powder 7 also mixed in the electrolytic solution 6 therethrough. Thereby, occurrence of failure where, for example, the powder 7 reaches the porous body 4 and/or the coating 5 and causes clogging, or short-circuiting of the negative electrode 2 and the positive electrode 3 is caused is able to be reduced further.

The powder 7 is able to exist movably in the electrolytic solution 6 in a range partitioned by the filter member 13 in the case 8. Further, when the powder 7 exists movably in the electrolytic solution 6, as the powder 7 moves, dissolution of zinc from the powder 7 that has gone in the electrolytic solution 6 low in concentration of [Zn(OH)₄]²⁻ is facilitated, and thus the concentration of [Zn(OH)₄]²⁻ in the electrolytic solution 6 is able to be maintained high.

According to the above description of the embodiment, all of the stirrer 11, the heater 12, and the filter member 13 are included, but not necessarily all of these are included, and they may be arranged selectively as necessary.

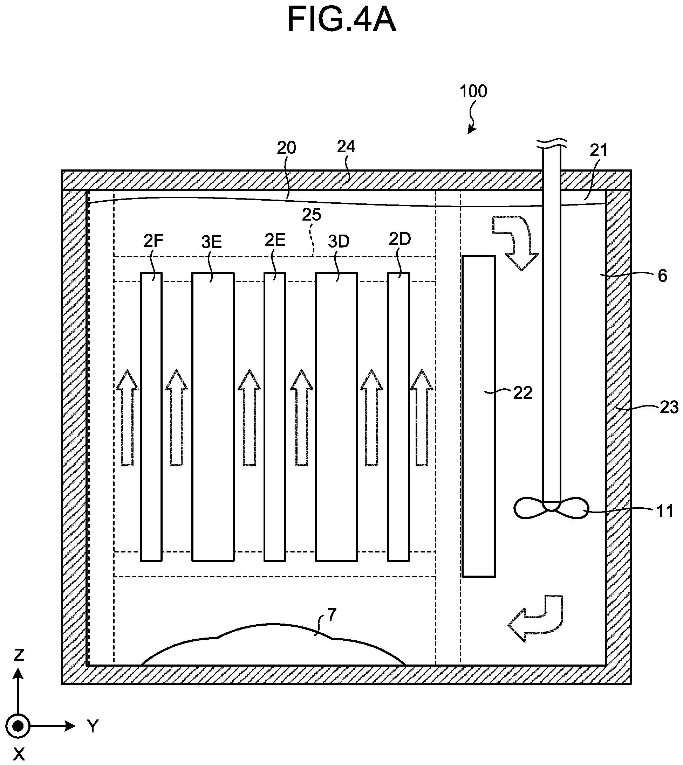

The zinc battery 1B including the stirrer 11 is an example of a zinc flow battery. Hereinafter, a zinc flow battery having a plurality of the negative electrodes 2 and a plurality of the positive electrode 3 alternately arranged therein will be described by use of FIG. 4A to FIG. 4C.

### Zinc Flow Battery According to First Embodiment

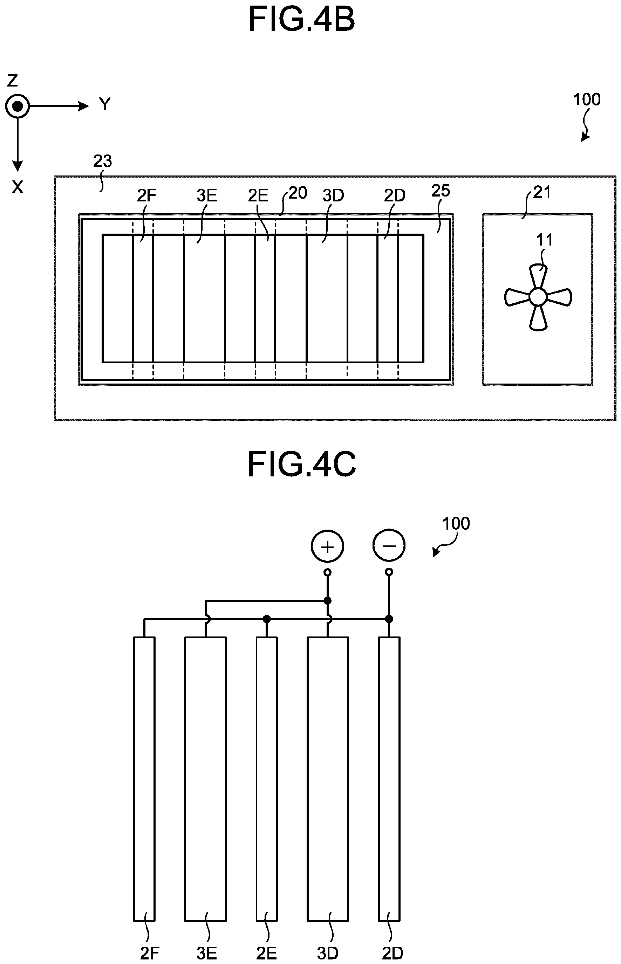

FIG. 4A is a diagram illustrating an outline of a zinc flow battery according to the first embodiment, and FIG. 4B is a top view of the zinc flow battery illustrated in FIG. 4A.

A zinc flow battery 100 illustrated in FIG. 4A and FIG. 4B includes, inside the zinc flow battery 100 formed of a case 23 and an upper plate 24: a reaction chamber 20 where charging and discharging reactions take place; and a stirring chamber 21 where the stirrer 11 is accommodated. In FIG. 4A, illustration of parts corresponding to the heater 12 and the filter member 13 illustrated in FIG. 3 has been omitted. Hereinafter, illustration and description of the heater 12 and filter member 13 will be omitted, but these may be present or absent.

The reaction chamber 20 and the stirring chamber 21 are adjacent to each other via a partition plate 22. Further, the case 8 is open at the top and bottom of the partition plate 22, and the reaction chamber 20 and the stirring chamber 21 are thus communicated with each other at the top and bottom of the partition plate 22. By operation of the stirrer 11, the electrolytic solution 6 filled into the case 8 forms a circulation flow path where the electrolytic solution 6 flows into the reaction chamber 20 from a lower part of the stirring chamber 21 and returns to the stirring chamber 21 from an upper part of the reaction chamber 20. The zinc flow battery 100 having such a configuration enables the electrolytic solution 6 to flow without use of a pump and a piping, and thus enables prevention of leakage of the electrolytic solution 6 from joints to the pump and piping.

Further, the reaction chamber 20 has the pluralities of electrodes alternately arranged along an X-axis direction, from a side closer to the stirring chamber 21, in the order of a negative electrode 2D, a positive electrode 3D, a negative electrode 2E, a positive electrode 3E, and a negative electrode 2F. These electrodes are held by a rack 25 enabling the replacement work therefor to be facilitated. Further, the powder 7 is arranged to be mixed in the electrolytic solution 6 at a lower part of the reaction chamber 20 separated from the stirrer 11, so that the powder 7 dispersed in association with the operation of the stirrer 11 does not reach the electrodes.

When the zinc flow battery 100 is charged, [Zn(OH)₄]²⁻ dissolved in the electrolytic solution 6 in the vicinity of the negative electrodes 2D, 2E, and 2F is consumed, and the amount of [Zn(OH)₄]²⁻ dissolved in the electrolytic solution 6 is decreased. When the amount of [Zn(OH)₄]²⁻ dissolved in the electrolytic solution 6 is decreased, zinc is dissolved from the powder 7 in accordance with the decrease, and [Zn(OH)₄]²⁻ is resupplied in the electrolytic solution 6. By supply of the electrolytic solution 6 having the amount of dissolved [Zn(OH)₄]²⁻ adjusted therein to the vicinity of the negative electrodes 2D, 2E, and 2F, growth of dendrite at the negative electrodes 2D, 2E, and 2F is reduced. Thereby, electric conduction between each of: the negative electrode 2D and positive electrode 3D; the negative electrode 2E and positive electrode 3D; the negative electrode 2E and positive electrode 3E; and the negative electrode 2F and positive electrode 3E, is able to be reduced.

Next, connection between the electrodes in the zinc flow battery 100 will be described. FIG. 4C is a diagram for explanation of an example of the connection between the electrodes of the zinc flow battery 100 according to the first embodiment.

As illustrated in FIG. 4C, the negative electrode 2D, negative electrode 2E, and negative electrode 2F are parallelly connected. Further, the positive electrode 3D and positive electrode 3E are parallelly connected. By such parallel connection between the negative electrodes and between the positive electrodes, the electrodes of the zinc flow battery 100 are able to be connected appropriately and used, where the total number of the negative electrodes and the total number of the positive electrodes are different from each other.

According to the above described embodiment, the zinc flow battery 100 is configured to include a total of five electrodes with the negative electrodes and the positive electrodes being arranged alternately, but without being limited thereto, the zinc flow battery 100 may be configured to include five or more electrodes arranged alternately. Further, according to the above described embodiment, the zinc flow battery 100 is configured such that both of its end electrodes are negative electrodes (2D and 2F), but without being limited thereto, the zinc flow battery 100 may be configured such that both of its end electrodes are positive electrodes.

Further, the same numbers of negative electrodes and positive electrodes may be alternately arranged such that one of the end electrodes is a positive electrode and the other end electrode is a positive electrode. In that case, the electrodes may be connected in parallel or in series.

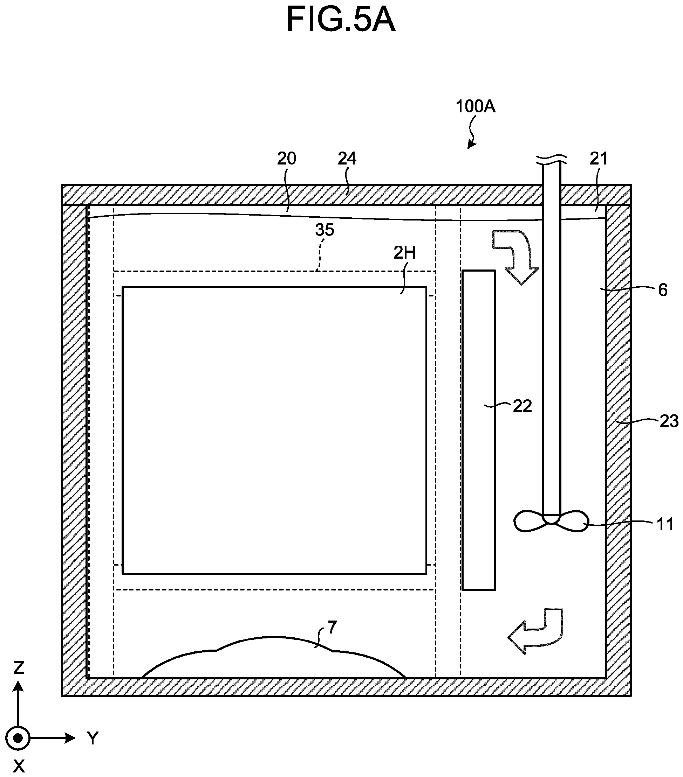

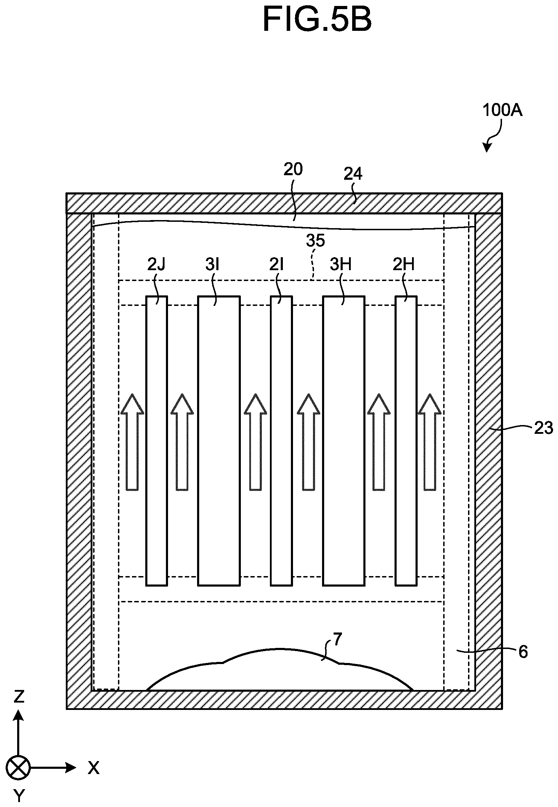

According to the above described embodiment, the electrodes are arranged such that principal planes of the electrodes face the stirring chamber 21, but the embodiment is not limited to this arrangement. Hereinafter, this point will be described by use of FIG. 5A and FIG. 5B.

### Zinc Flow Battery According to Second Embodiment

FIG. 5A is a diagram illustrating an outline of a zinc flow battery according to the second embodiment, and FIG. 5B is a side view of the zinc flow battery illustrated in FIG. 5A as viewed from a negative side along a Y-axis.

A zinc flow battery 100A illustrated in FIG. 5A and FIG. 5B has the same configuration as that of the zinc flow battery 100 according to the first embodiment, except that the zinc flow battery 100A includes: electrodes arranged in the reaction chamber 20; and a rack 35 that makes the direction, in which the electrodes are supported, different, instead of the rack 25 that supports the electrodes.

In the zinc flow battery 100A, a side surface of each electrode is arranged to face the stirring chamber 21, and more specifically, a negative electrode 2H, a positive electrode 3H, a negative electrode 2I, a positive electrode 3I, and a negative electrode 2J are arranged side by side along a Y-axis direction. A structure that hinders circulation of the electrolytic solution 6 is not present between the stirring chamber 21 and each electrode, and distances between the stirring chamber 21 and the electrodes are substantially the same. Therefore, the zinc flow battery 100A according to the second embodiment enables more reduction of pressure loss associated with the circulation of the electrolytic solution 6 than in the zinc flow battery 100 according to the first embodiment, and thus enables smoother circulation of the electrolytic solution 6.

### Zinc Flow Battery According to Third Embodiment

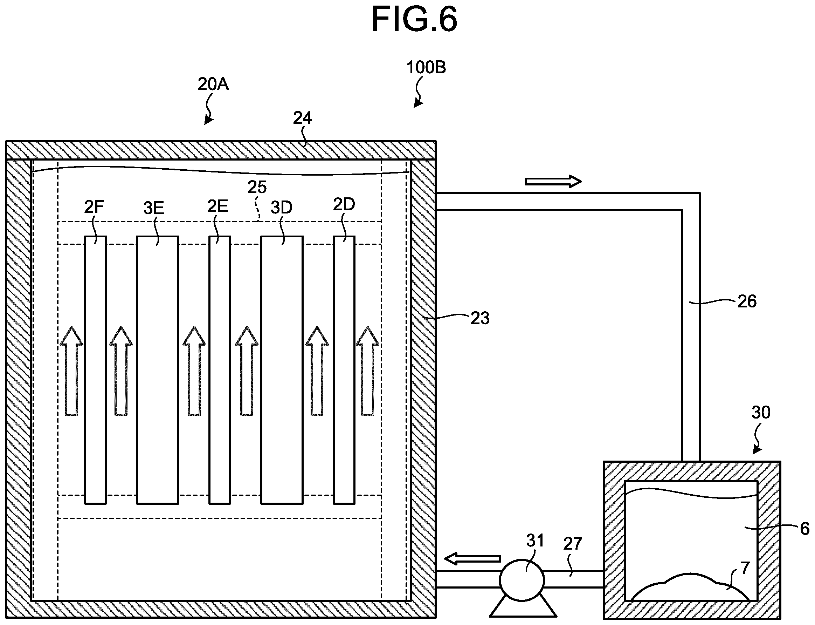

FIG. 6 is a diagram illustrating an outline of a zinc flow battery according to a third embodiment. A zinc flow battery 100B illustrated in FIG. 6 includes a reaction unit 20A, a tank 30, pipings 26 and 27 connecting the reaction unit 20A and the tank 30 to each other, and an electrolytic solution supplying unit 31. The reaction unit 20A corresponds to the reaction chamber 20 in the zinc flow battery 100 according to the first embodiment. The electrolytic solution supplying unit 31 is, for example, a pump that is able to transfer the electrolytic solution 6.

The electrolytic solution 6 is fed to the reaction unit 20A via the piping 27 by the electrolytic solution supplying unit 31 from the tank 30 provided separately from the case 23. Upon battery charging, [Zn(OH)₄]²⁻ in the electrolytic solution 6 that has flown into the reaction unit 20A is consumed at the negative electrodes 2D, 2E, and 2F, and is returned to the tank 30 in the state where the amount of [Zn(OH)₄]²⁻ dissolved in the electrolytic solution 6 has been decreased. When the electrolytic solution 6 with the decreased amount of [Zn(OH)₄]²⁻ dissolved in the electrolytic solution 6 is returned to the tank 30, zinc is dissolved from the powder 7 also mixed in the tank 30 in accordance with the return, and [Zn(OH)₄]²⁻ is resupplied in the electrolytic solution 6. By supply of the electrolytic solution 6 having the amount of [Zn(OH)₄]²⁻ dissolved therein adjusted, to the vicinity of the negative electrodes 2D, 2E, and 2F; growth of dendrite at the negative electrodes 2D, 2E, and 2F is reduced. Thereby, electric conduction between each of: the negative electrode 2D and positive electrode 3D, the negative electrode 2E and positive electrode 3D, the negative electrode 2E and positive electrode 3E, and the negative electrode 2F and positive electrode 3E, is able to be reduced.

According to the above description of the embodiment, the powder 7 is mixed in the electrolytic solution 6 in the tank 30, but without being limited thereto, the powder 7 may be mixed in the electrolytic solution 6 inside the reaction unit 20A, or mixed in the electrolytic solution 6 in both the reaction unit 20A and tank 30.

The powder 7 is able to move in the electrolytic solution 6 inside the tank 30, or in the electrolytic solution 6 inside the tank 30 and reaction unit 20A. As the powder 7 moves in the electrolytic solution 6, dissolution of zinc from the powder 7 is promoted when the powder 7 goes in the electrolytic solution 6 low in concentration of [Zn(OH)₄]²⁻, and thus it becomes easier for the concentration of [Zn(OH)₄]²⁻ in the electrolytic solution 6 to be maintained high.

Hereinbefore, embodiments of the present invention have been described, but the present invention is not limited to these embodiments, and various modifications may be made without departing from the gist of the invention. For example, although the zinc flow batteries 100 to 100B according to the embodiments have been described, without being limited thereto, the zinc batteries 1 to 1B according to the embodiments and modified example may be used in the reaction chamber 20 of the zinc flow battery 100 or 100A, or in the reaction unit 20A of the zinc flow battery 100B.

Further, according to the above description of the embodiment, the negative electrode 2 does not include a negative electrode active material, such as a zinc species, but without being limited thereto, the negative electrode 2 may include a negative electrode active material. Note that, in terms of reduction of time degradation, such as shape change, the amount of negative electrode active material included in the negative electrode 2 is preferably little.

According to the above description of the embodiment, the porous body 4 covers the negative electrode 2, but without being limited thereto, the porous body 4 is just preferably arranged between the negative electrode 2 and the coating 5. Further, the porous body 4 may be in contact with the coating 5, or arranged separately from the coating 5. Furthermore, the porous body 4 may be arranged separately from the negative electrode 2. For example, the zinc flow battery 100 according to the first embodiment may have a layered structure where the porous body 4 is each arranged between the negative electrode 2D and positive electrode 3D, between the positive electrode 3D and negative electrode 2E, between the negative electrode 2E and positive electrode 3E, and between the positive electrode 3E and negative electrode 2F. Moreover, the porous body 4 may be not arranged at all.

According to the above description of the embodiment, the coating 5 covers the positive electrode 3, but without being limited thereto, the coating 5 is just preferably arranged between the negative electrode 2 (or the porous body 4) and the positive electrode 3.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

### Reference Signs List

1, 1A, 1B ZINC BATTERY
2, 2A, 2B, 2D TO 2F, 2H TO 2J NEGATIVE ELECTRODE
3, 3A, 3D, 3E, 3H, 3I POSITIVE ELECTRODE
4 POROUS BODY
5 COATING
6 ELECTROLYTIC SOLUTION
7 POWDER
11 STIRRER
12 HEATER
13 FILTER MEMBER
20 REACTION CHAMBER
20A REACTION UNIT
26, 27 PIPING
30 TANK
31 ELECTROLYTIC SOLUTION SUPPLYING UNIT
100, 100A, 100B ZINC FLOW BATTERY

## Claims

1. A zinc battery, comprising:
a negative electrode and a positive electrode;
an electrolytic solution in contact with the negative electrode and the positive electrode; and
a powder including zinc and mixed in the electrolytic solution.

2. The zinc battery according to claim 1, wherein the powder can move in the electrolytic solution.

3. The zinc battery according to claim 1 or 2, wherein
the negative electrode consumes, upon battery charging, a zinc species dissolved in the electrolytic solution, and
the zinc species that has been consumed is resupplied, by dissolution of the zinc included in the powder into the electrolytic solution.

4. The zinc battery according to any one of claims 1 to 3, wherein the positive electrode has been covered by a coating having hydroxide ion conductivity.

5. The zinc battery according to claim 4, further comprising a porous body having electric conductivity between the negative electrode and the coating.

6. The zinc battery according to any one of claims 1 to 5, further comprising a heater that heats the electrolytic solution.

7. The zinc battery according to any one of claims 1 to 6, wherein the negative electrode includes a first electrode and a second electrode that are arranged to face each other with the positive electrode interposed between the first and second electrodes.

8. The zinc battery according to any one of claims 1 to 7, wherein the electrolytic solution is an alkali aqueous solution saturated with a zinc species.

9. A zinc flow battery, comprising:
a reaction chamber including the zinc battery according to any one of claims 1 to 8; and
a stirrer that stirs the electrolytic solution.

10. A zinc flow battery, comprising:
a reaction unit including a negative electrode and a positive electrode;
an electrolytic solution in contact with the negative electrode and the positive electrode;
a tank storing therein the electrolytic solution;
a powder mixed in the electrolytic solution, the powder including zinc;
a piping that circulates the electrolytic solution between the reaction unit and the tank; and
an electrolytic solution supplying unit that feeds the electrolytic solution from the tank to the reaction unit.
